# EUROPEAN PATENT SPECIFICATION

(11) **EP 1 113 964 B1**
(45) Date of publication and mention of the grant of the patent: **26.03.2003**
(21) Application number: 99941893.2
(22) Date of filing: 07.09.1999
(51) Int. Cl.: B65D 1/34, B65D 57/00, B29C 53/26, G07F 11/66

(54) **APPARATUS FOR PACKAGING SLICED FOOD**
VORRICHTUNG ZUM VERPACKEN VON IM SCHEIBEN GESCHNITTENEN LEBENSMITTELN
APPAREIL DE CONDITIONNEMENT D'ALIMENTS EN TRANCHES

(30) Priority: 17.09.1998 NL 1010120
(43) Date of publication of application: 11.07.2001
(73) Proprietor: Food-Corner International B.V., 6641 SZ Beuningen (NL)
(72) Inventor: MOONS, Wilhelmus, Andreas, Maria, NL-6525 JL Nijmegen (NL); DESSING, Jacobus, Petrus, Maria, NL-2142 LA Cruquius (NL)
(74) Representative: Uittenbogaart, Gustaaf Adolf
(86) International application number: NL9900555
(87) International publication number: WO00015509

(56) References cited:
- EP-A- 0 470 673
- WO-A-93/23294
- FR-A- 1 377 911
- GB-A- 2 192 203
- NL-A- 7 804 754
- US-A- 3 666 590

## Description

The invention relates to a device according to the preamble of Claim 1. A device of this nature is known from US-A-5,520,941. In this known device, the cut slices are received on supports, which are not shown in more detail. The object of the invention is to provide supports which, during conveying and packaging in the machine, do not cause any disruption and which can easily be kept in stock and made in the device. To this end, the device is designed in accordance with the characterizing part of Claim 1. In this way, a support is made in a simple and advantageous manner from an endless sheet which is kept in stock on a reel and does not cause any disruption in the device.

According to a refinement, the device is designed according to Claim 2. In this way, the sheet is easy to deform into a stable support.

According to a refinement, the device is designed according to Claim 6. This makes it easy to obtain a support with deformed edges, which is sufficient for it to be used without causing disruption in the device.

According to a refinement, the device is designed according to Claim 7. This allows uninterrupted use of the device and avoids disruption.

The invention also comprises a reel according to Claim 8. The use of a reel of sheet comprising at least two planar plastic films makes it possible to make a stable support which does not cause any disruption in the device and, when used with foodstuffs which have been cut into slices, has a pleasant feel for the user, and the support can adhere to a meat product which has been cut into slices in a manner which is also not unpleasant. A reel of profiled plastic material made of at least two plastic sheets is for example known from FR-A-1,377,911.

The invention is explained below with reference to an exemplary embodiment and with the aid of a drawing, in which:
Figure 1 shows a diagrammatic plan view of a slice support with slices of meat product,
Figure 2 shows a cross section II-II from Figure 1,
Figure 3 shows a diagrammatic side view of the slice support from Figure 1,
Figure 4 shows a view of the end of the slice support from Figure 1,
Figure 5 shows a diagrammatic side view of a device for making slice supports as shown in Figures 1-4,
Figure 6 shows a diagrammatic plan view of the device shown in Figure 5,
Figure 7 shows a diagrammatic cross section through a rolling mill as used in the device shown in Figures 5 and 6, and
Figure 8 shows a detail A of the roller gap in the rolling mill shown in Figure 7.

In the various figures, the same components are wherever possible denoted by the same reference numeral.

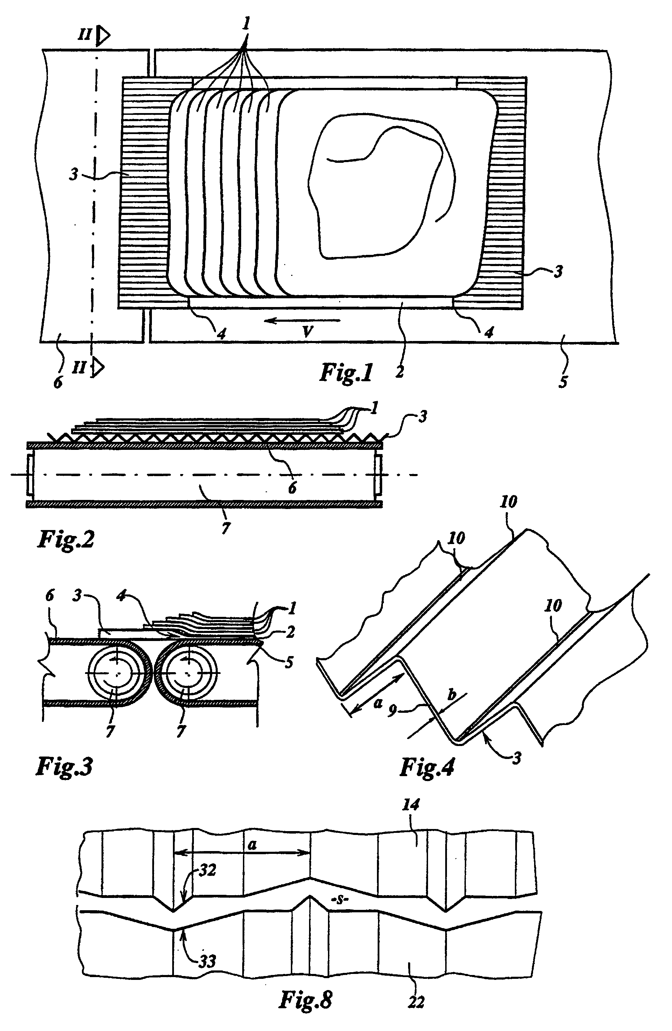

Figure 1 shows a slice support 2 on which a number of slices of meat product 1 are lying. The slice support 2 rests on a first conveyor belt 5 and, from there, is transported to a second conveyor belt 6 in a direction of transport V. The slice support 2 is made from planar plastic sheet and is provided at its ends with a profiled edge 3 which is delimited by a profiling border 4.

The conveyor belts 5 and 6 form part, for example, of a device such as that which is known from US-A-5,520,941, in which, inter alia, meat products are cut into slices by an automatically operating cutting device. These cut slices are laid on a slice support and are weighed, for example during or after the cutting operation. The slice support with slices is then conveyed through the device by means of conveyor belts, such as the conveyor belts 5 and 6, from the cutting device to the weighing device, to the packaging device and then to the dispensing point.

Figures 2 and 3 show different views of the various components, also illustrating a drive roll 7 which is used both with the first conveyor belt 5 and with the second conveyor belt 6. As can clearly be seen from Figure 3, the profiled edge 3 ensures that the slice support 2 cannot move between the curved surfaces at the location of the rolls 7 during the transition from the first conveyor belt 5 to the second conveyor belt 6, thus preventing disruption. The slice support 2 is made from thin sheet material which, since it comes from a reel, is slightly bent and readily follows the belt and could stick to it, and consequently would move between the rolls 7 with the first conveyor belt 5. By making the edge 3 slightly profiled or providing it with grooves, this sheet no longer sticks to the conveyor belt, with the result that the transition from the first conveyor belt 5 to the second conveyor belt 6 does not cause any problems.

Figure 4 shows a more detailed view of the end of the profiled edge 3. The slice support 2 comprises a plastic sheet 9 which is suitable for use with foodstuffs. The plastic sheet 9 comprises a double polypropylene film with a filler, such as for example calcium carbonate, arranged between the two films. This imparts a white appearance and a slightly stable feel to the plastic sheet. The two polypropylene films may have different properties, so that the top side of the plastic sheet 9 feels different from the underside of the plastic sheet 9, an effect which is more pleasant in use. Also, one side of the sheet may, if appropriate, be printed. The thickness b of the plastic sheet 9 is approximately 0.2 mm. Sharp creases or grooves 10 are made in the profiled support edge 3, always on alternate sides of the plastic sheet 9, resulting in a type of zigzag structure of the profiled support edge 3. When the support is pressed flat by the slices, the result is a longitudinal profile in which the sheet is slightly bent in an alternating fashion between the grooves. If appropriate, the sharp creases or grooves 10 may also be arranged on one side.

The distance a between the sharp creases or grooves 10 is approximately 2 mm or, for example, approximately 10 × the thickness b of the plastic sheet 9. Other dimensions for the distance a are also possible, these dimensions always being sufficiently small to ensure that they maintain a stabilized surface of the plastic sheet 9 between the sharp creases or grooves 10. It has been found that there is insufficient stabilization in the event of the distance a being greater than 4 mm or greater than 15 × the thickness b of the plastic sheet 9.

In the slice support 2 shown in Figure 1, the sharp creases or grooves 10 only run over a limited length of the sheet material; however, it is also possible for the sharp creases or grooves to be arranged over the entire length of the slice support 2.

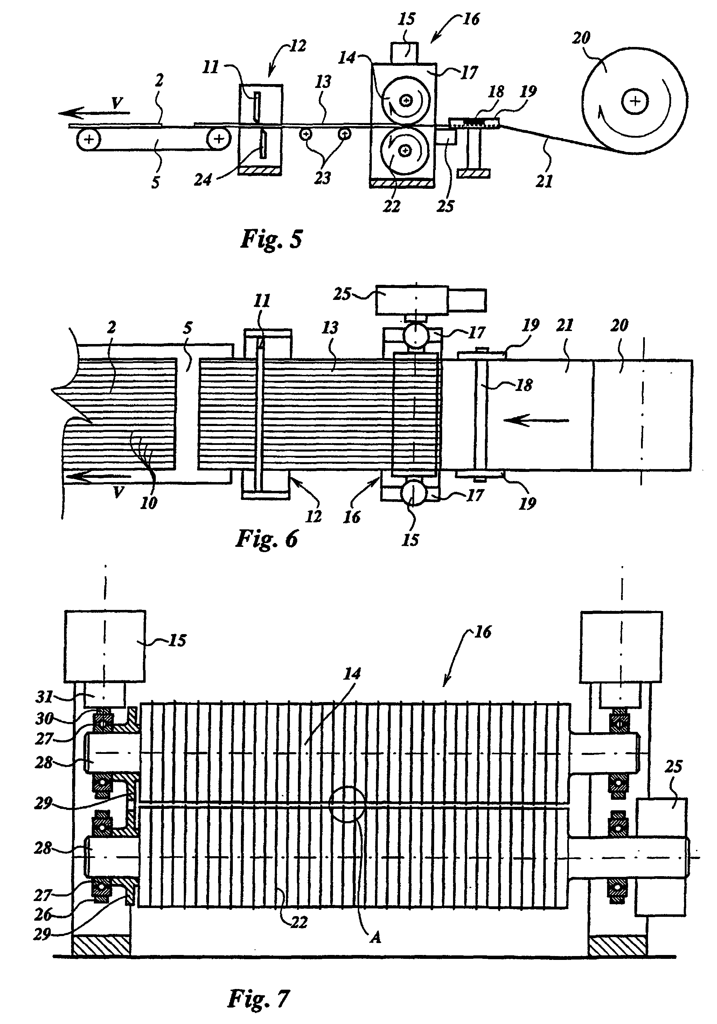

A device for making slice supports 2 is shown in Figures 5 and 6. Unprofiled sheet 21 is stored on a stock reel 20 and can be unrolled freely from this reel. The unprofiled sheet 21 is guided between a side guide 19 and a clamping strip 18 towards a rolling mill 16. In the rolling mill 16, the unprofiled sheet 21 is guided between an upper profiling roll 14 and a lower profiling roll 22, these profiling rolls 14 and 22 being able to press the sharp creases or grooves 10 into the material. For this purpose, the lower profiling roll 22 and the upper profiling roll 14 are pressed together by means of a clamping cylinder 15. In this way, profiled sheet 13 is formed in the rolling mill 16 and is conveyed to a cutting device 12 over support rolls 23. This conveying is carried out by means of the rolling mill 16. The profiling rolls 14 and 22 are secured in a roller frame 17 and are driven by means of a drive 25.

An upper blade 11 and a lower blade 24 are secured in the cutting device 12 and can be used to cut the profiled sheet 13 to the desired length each time so as to form a slice support 2 which is conveyed onwards in a direction V by the first conveyor belt 5. For this purpose, the control unit of the cutting device 12 is coupled, in a known manner, to the control unit of the conveyor means for the profiled sheet 13, in this case the drive 25.

In addition to the embodiment illustrated with an upper blade 11 and a lower blade 24, the cutting device 12 may also be designed, in a known manner, with a rolling blade, in which case a rotating, disc-like rolling blade rolls along a straightedge on which the profiled sheet 13 is resting. The advantage of the rolling blade is that it is kept sharp by the straightedge.

In the embodiment shown, it can be seen that the unprofiled sheet 21 is profiled into the profiled sheet 13 over its entire length. In this case, the clamping cylinders 15 are permanently active throughout the movement of the sheet and in this case may be designed as a spring. If appropriate, the rolls may be mounted at a set distance apart, which distance may be adjustable in order to adapt the rolling mill 16 to the thickness b of the unprofiled sheet.

Intermittent activation of the clamping cylinders 15, in conjunction with the cutting movement of the cutting device 12, allows the profiling to be applied only to the profiled edges 3 of the slice support 2, as shown in Figure 1, an arrangement which may be advantageous for some applications. An additional drive for the sheet 21 which has not yet been cut into slice supports 2 is then required.

Figure 7 shows the rolling mill 16 in more detail. The profiling rolls 14 and 22 are each provided with shafts 28 which are mounted in bearings 27. Gearwheels 29 are attached to one side of the shaft 28, so that the rotation of the lower profiling roll 22 is coupled to that of the upper profiling roll 14. The lower profiling roll 22 is secured in a fixed bearing support 26, and the upper profiling roll is secured in a moveable bearing support 30 which, by means of a pressure-exerting piece 31, can be moved towards the lower profiling roll 22, thus allowing the profiling rolls to be moved towards one another, by means of the clamping cylinder 15, with a greater or lesser force.

Figure 8 shows detail A from Figure 7, with a gap S between the upper profiling roll 14 and the lower profiling roll 22. Each profiling roll is alternately provided with a creasing blade 32 and a groove 33 which interact with one another and are arranged at the distance a apart. The creasing blade 32 presses the sharp crease or groove 10 into the plastic sheet 21 which, in that area, is supported by the groove 33. The width of the gap S approximately corresponds to the thickness b of the plastic sheet 21. A design in which one roll is provided only with creasing blades 32 and the second roll is provided only with grooves 33 is also possible.

The device shown here is preferably used in combination with a cutting device for meat products such as that which is known, for example from American Patent US-5,520,941, with which meat products, without supervision from operators, are cut into slices and laid on a slice support, which is then conveyed to a weighing device, where it is weighed, and then to a packaging device, where it is packaged. In a device of this nature, it is extremely important for there to be no problems with conveying along conveyor belts, and it is essential that the machine should function without disruption. This is achieved by making the sharp creases or grooves 10 referred to above.

In one embodiment of a device of this nature, the stock reel 20 and the rolling mill 16 are constructed together on a single profiling unit. The profiling units are positioned in front of each cutting device 12, for example above one another. There may also be sensors or other means for detecting whether a stock reel 20 is empty. During use, a first profiling unit is employed by the cutting device 12 and the second profiling unit is ready for operation with the plastic sheet 21 between the profiling rolls 14 and 22. When the stock reel 20 of the first profiling unit is empty, the control unit positions the second profiling unit in front of the cutting device 12, and meat products can continue to be cut without interruption. The empty stock reel 20 can be exchanged for a full reel at a suitable moment.

In the exemplary embodiment shown, the sheet which is wound on the reel 20 is provided with grooves, in order to prevent the edges of the support, after cutting, from sticking to the conveyor belt 5 or 6 at the cut edge, which may give rise to disruption. If appropriate, these edges may also be stabilized in some other way, for example by applying a deformation to the support in the vicinity of the edge in another way, for example using a punch and/or by locally heating the material. This operation may in this case be carried out before or after the endless sheet 21 is cut into supports.

## Claims

1. Device for the automatic packaging of foodstuffs which have been cut into slices (1), comprising a cutting device for cutting the foodstuffs into slices, a support (2, 3) for receiving cut slices and collecting them into a group, conveyor means (5) for displacing the support with slices, packaging means for packaging the support with slices, and control means for controlling the device, **characterized in that** there are means for making a support (2, 3) from a sheet (21) which is wound on a reel (20), which means comprise, inter alia, deformation means (16) for deforming the sheet (21) and cutting means (12) for cutting the sheet into separate supports (2, 3).

2. Device according to Claim 1, **characterized in that** the deformation means comprise a rolling mill (16) with profiled rolls (14, 22).

3. Device according to Claim 2, **characterized in that** the rolling mill, with the aid of clamping means (15), is able to press sharp grooves or creases (10) into the sheet (21) on either side alternately.

4. Device according to Claim 3, **characterized in that** the distance (a) between the sharp grooves or creases (10) is less than 4 mm.

5. Device according to Claim 3, **characterized in that** the distance (a) between the sharp grooves or creases (10) is less than 15 times the thickness (b) of the sheet (21).

6. Device according to one of the preceding claims, **characterized in that** synchronization means are provided between the cutting means (12) and the deformation means (16), in order to activate the deformation means (16) at least in the vicinity of the cut.

7. Device according to one of the preceding claims, **characterized in that** the reel (20) and the deformation means (16) are mounted in a profiling unit, and the device comprises at least two profiling units which are placed alternately in front of the cutting device (12).

8. Reel (20) for use in a device according to one of the preceding claims on which a sheet (21) is wound which is used for making supports (2, 3) for sliced foodstuff, the sheet comprising at least two planar plastic films **characterized in that** between the plastic films a filler material such as calcium carbonate is arranged.

9. Reel according to claim 8 **characterized in that** both sides of the surface of the sheet have different tactile properties.

## Patentansprüche

1. Vorrichtung zur automatischen Verpackung von Nahrungsmitteln, welche in Scheiben (1) geschnitten wurden, umfassend eine Schneidvorrichtung zum Schneiden der Nahrungsmittel in Scheiben, eine Unterlage (2, 3) zur Aufnahme geschnittener Scheiben und ihrer Zusammensammlung zu einer Gruppe, Fördermittel (5) zum Verschieben der Unterlage mit Scheiben, Verpackungsmittel zum Verpacken der Unterlage mit Scheiben und Steuermittel zum Steuern der Vorrichtung, **dadurch gekennzeichnet, daß** es Mittel zum Herstellen einer Unterlage (2, 3) aus einem Blatt (21), welches auf eine Rolle gewickelt (20) ist, gibt, welche Mittel unter anderem Verformungsmittel (16) zum Verformen des Blattes (21) und Schneidmittel (12) zum Schneiden des Blattes in getrennte Unterlagen (2, 3) umfassen.

2. Vorrichtung nach Anspruch 1, **dadurch gekennzeichnet, daß** die Verformungsmittel ein Walzwerk (16) mit profilierten Walzen (14, 22) umfassen.

3. Vorrichtung nach Anspruch 2, **dadurch gekennzeichnet, daß** das Walzwerk mit Hilfe von Klemmitteln (15) fähig ist, scharfe Rillen oder Falten (10) abwechselnd auf jeder Seite in das Blatt (21) zu pressen.

4. Vorrichtung nach Anspruch 3, **dadurch gekennzeichnet, daß** der Abstand (a) zwischen den scharfen Rillen oder Falten (10) weniger als 4 mm ist.

5. Vorrichtung nach Anspruch 3, **dadurch gekennzeichnet, daß** der Abstand (a) zwischen den scharfen Rillen oder Falten (10) weniger als 15 Mal die Dicke (b) des Blattes (21) ist.

6. Vorrichtung nach einem der vorhergehenden Ansprüche, **dadurch gekennzeichnet, daß** Synchronisierungsmittel zwischen den Schneidmitteln (12) und den Verformungsmitteln (16) vorgesehen sind, um die Verformungsmittel (16) wenigstens in der Nachbarschaft des Schnittes zu betätigen.

7. Vorrichtung nach einem der vorhergehenden Ansprüche, **dadurch gekennzeichnet, daß** die Rolle (20) und die Verformungsmittel (16) in eine Profiliereinheit eingebaut sind und die Vorrichtung wenigstens zwei Profiliereinheiten umfaßt, welche abwechselnd vor der Schneidvorrichtung (12) angeordnet sind.

8. Rolle (20) zur Verwendung in einer Vorrichtung nach einem der vorhergehenden Ansprüche, auf welche ein Blatt (21) gewickelt ist, welches zur Herstellung von Unterlagen (2, 3) für Nahrungsmittel, das in Scheiben geschnitten ist, verwendet wird, wobei das Blatt wenigstens zwei ebene Kunststoffolien umfaßt, **dadurch gekennzeichnet, daß** zwischen den Kunststoffolien ein Füllmaterial, wie beispielsweise Kalziumkarbonat, angeordnet ist.

9. Rolle nach Anspruch 8, **dadurch gekennzeichnet, daß** beide Seiten der Oberfläche des Blattes verschiedene Tasteigenschaften aufweisen.

## Revendications

1. Dispositif de conditionnement automatique d'aliments qui ont été découpés en tranches (1), comprenant un dispositif de coupe pour découper les aliments en tranches, un support (2, 3) destiné à recevoir les tranches découpées et à les assembler en un groupe, des moyens de transport (5) destinés à déplacer le support supportant les tranches, des moyens de conditionnement destinés à conditionner le support supportant les tranches et des moyens de commande destinés à commander le dispositif, **caractérisé en ce qu'**il comprend des moyens pour créer un support (2, 3) à partir d'une feuille (21) qui est enroulée sur un dévidoir (20), lesquels moyens comprennent, entre autres, des moyens de déformation (16) destinés à déformer la feuille (21) et des moyens de coupe (12) destinés à couper la feuille pour former des supports (2, 3) séparés.

2. Dispositif selon la revendication 1, **caractérisé en ce que** les moyens de déformation comprennent un laminoir (16) comportant des rouleaux profilés (14, 22).

3. Dispositif selon la revendication 2, **caractérisé en ce que** le laminoir, à l'aide des moyens de serrage (15), peut former par pression des rainures ou des plis aigus (10) dans la feuille (21) sur chaque côté alternativement.

4. Dispositif selon la revendication 3, **caractérisé en ce que** la distance (a) entre les rainures ou les plis aigus (10) est inférieure à 4 mm.

5. Dispositif selon la revendication 3, **caractérisé en ce que** la distance (a) entre les rainures ou les plis aigus (10) est inférieure à 15 fois l'épaisseur (b) de la feuille (21).

6. Dispositif selon l'une quelconque des revendications précédentes, **caractérisé en ce que** des moyens de synchronisation sont prévus entre les moyens de coupe (12) et les moyens de déformation (16) afin d'actionner les moyens de déformation (16) au moins à proximité de la coupe.

7. Dispositif selon l'une quelconque des revendications précédentes, **caractérisé en ce que** le dévidoir (20) et les moyens de déformation (16) sont montés dans une unité à profiler, et le dispositif comprend au moins deux unités à profiler qui sont placées en alternance devant le dispositif de coupe (12).

8. Dévidoir (20) à utiliser dans un dispositif selon l'une quelconque des revendications précédentes, sur lequel est enroulée une feuille (21) qui est utilisée pour créer les supports (2, 3) pour les aliments en tranches, la feuille comprenant au moins deux films plastique plans, **caractérisé en ce qu'**une charge, comme du carbonate de calcium, est disposée entre les films plastique.

9. Dévidoir (20) selon la revendication 8, **caractérisé en ce que** les deux côtés de la surface de la feuille ont des propriétés tactiles différentes.
